# EUROPEAN PATENT APPLICATION

(11) **EP 3 399 179 A1**
(43) Date of publication of application: **07.11.2018**
(21) Application number: 18169155.1
(22) Date of filing: 25.04.2018
(51) Int. Cl.: F03B 17/06

(54) **SYSTEM FOR GENERATING POWER FROM MOVING WATER**

(30) Priority: 01.05.2017 NL 2018814
(71) Applicant: De Bruijn, Arnout Sebastiaan Nicolaas, 3882 LV Putten (NL)
(72) Inventor: de Bruijn, Arnout Sebastiaan Nicolaas, 3882 LV Putten (NL)
(74) Representative: Nederlandsch Octrooibureau

(57) **Abstract**

A system for generating mechanical and/or electrical power from moving water, the system comprising a conveyor unit (2) for stationary placement in and/or along a surface of moving water (4) extending from an upstream location (Lu) toward a downstream location (Ld) and in a flow direction (F) of the moving water (4). The conveyor unit (2) comprises a conveyor member (6) forming a continuous loop and one or more paddle members (8) arranged along the conveyor member (6). The system (1) further comprises a substantially parallel arrangement of two deflection bodies (10a, 10b) for stationary placement in the moving water (4) extending from the upstream location (Lu) toward the downstream location (Ld) in the flow direction (F) of the moving water (4), wherein the two deflection bodies (10a,10b) enclose a flow constriction or convergent area (12) through which the conveyor unit (2) extends.

## Description

### Field of the invention

The present invention relates to a system for generating power from moving water, in particular to a linearly operating water turbine for generating mechanical and/or electrical power from moving water.

### Background

US patent application US 2013/0187387 A1 describes a linear hydro-kinetic power generation system that can be used to convert kinetic energy of low head flowing water into electric or mechanical power. The system comprises a plurality of paddle subassemblies supported on a suspension mechanism for maintaining the system stationary with respect to the moving water and at an appropriate depth. A conveyance system is provided and supported by the suspension mechanism for routing the paddle subassemblies in an elongated continuous loop when the moving fluid causes the paddle subassemblies to move along the length of the system. The system further comprises a paddle blade manipulation mechanism comprising rotation of the paddles in one or more axes of rotation, wherein a paddle handle attaches to the conveyance system via the paddle blade manipulation mechanism, and wherein the paddle blade manipulation mechanism is configured to bias the paddle blades into a retracted position when the paddle blades essentially parallel to the flow during a return trip along the conveyance system. In operation a paddle blade is maintained at a speed through the moving fluid at approximately one third to one half of an average moving fluid speed.

The linear hydro-kinetic power system as described above does suffer from disadvantages in that conversion efficiency to electrical output power remains suboptimal for e.g. slow moving water, thereby requiring a system having a relatively large footprint and a long suspension mechanism to achieve a higher power output, which may not be possible for particular locations at which the system is to be located.

### Summary of the invention

The present invention aims to provide a system for generating power for moving/flowing water, such as slowly moving water in a river, wherein the system exhibits increased efficiency and allows for increased power output for a reduced footprint of the system.

According to the present invention, a system of the type defined in the preamble is provided comprising a conveyor unit for stationary placement in and/or along a surface of moving water extending from an upstream location toward a downstream location and in a flow direction of the moving water. The conveyor unit comprises a conveyor member that forms a linearly or straight extending continuous loop and one or more paddle members arranged along and attached to the conveyor member, wherein each of the one or more paddle members is arranged normal to or at a paddle angle to a longitudinal axis of the conveyor member. The conveyer system is configured such that the one or more paddle members are immersible/immersed in the moving water along at least a linear portion of the conveyor member for movement thereof. The system further comprises two deflection bodies for stationary immersion and placement in the moving water and extend from the upstream location toward the downstream location and in the flow direction of the moving water, wherein the two deflection bodies are laterally spaced apart and enclose a flow constriction area through which the conveyor unit extends. The flow constriction area comprises an inlet side located at the upstream location and an outlet side located at the downstream location, wherein the inlet side is wider than the outlet side.

According to the present invention, the flow constriction area between the two deflection bodies provides flow convergence such that moving water is gradually constricted from the wider inlet side to the less wide outlet side of the flow constriction area. The moving water approaches the inlet side at a first flow speed and traverses through the flow constriction area toward a higher second flow speed near or at the outlet side. Likewise, a first mass flow rate at the inlet side increases toward a higher second mass flow rate at the outlet side. Convergence and constriction of moving water between the two deflection bodies occurs along the conveyor unit and in particular along a linear portion of the conveyor member where one or more paddle members are immersed in moving water. Since both the flow speed and mass flow rate increase from the inlet side to the outlet side, power output from the system for a given size of the conveyor unit is greatly increased. Because of the flow constriction zone as provided by the two deflection bodies, it is possible to utilize slow moving water as an alternative power source as usable power levels can be generated without the need for a prohibitively large footprint of the system.

In an advantageous embodiment, one of the two deflection bodies is pivotally arranged about a pivot point at the downstream location or at the outlet side of the flow constriction area, so that an inlet width of the inlet side can be adjusted according to particular requirements of the system for optimal flow convergence and constriction between the inlet side and the outlet side.

To further improve efficiency and power output of the system, one or each of the two deflection bodies may comprise a curved inner surface that defines a curved boundary of the flow constriction area extending alongside the conveyor unit, i.e. the conveyor member. The curved inner surface facilitates gradual convergence toward the outlet side and prevents excessive backpressure, water accumulation etc. at the inlet side. In a specific embodiment one or each of the two deflection bodies may comprise an air foil profile of which a suction side forms the curved inner surface, thereby allowing optimal performance of the system.

### Brief description of the drawings

The present invention will be discussed in more detail below, with reference to the attached drawings, in which
Figure 1 shows a top view of a system for generating power from moving water according to an embodiment of the present invention;
Figure 2 shows a side view of a conveyor unit according to an embodiment of the present invention;
Figure 3 shows a side view of a conveyor unit according to an alternative embodiment of the present invention;
Figure 4 shows a top view of two flared deflection bodies according to an embodiment of the present invention;
Figure 5 shows an upstream front view of a flared deflection body according to an embodiment of the present invention; and
Figure 6 shows an upstream front view of a flared deflection body provided with an overflow deflector according to an embodiment of the present invention.

### Detailed description of the embodiments

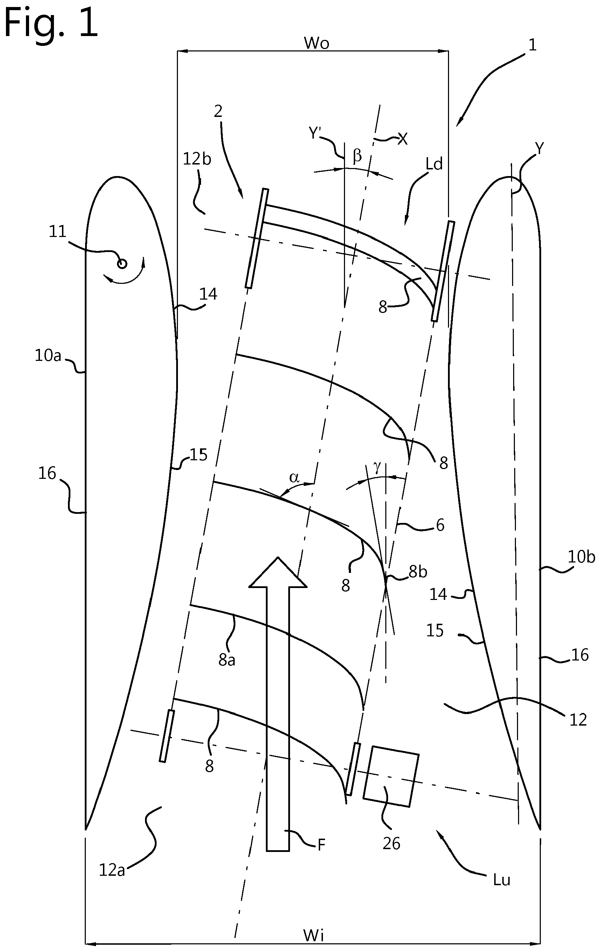

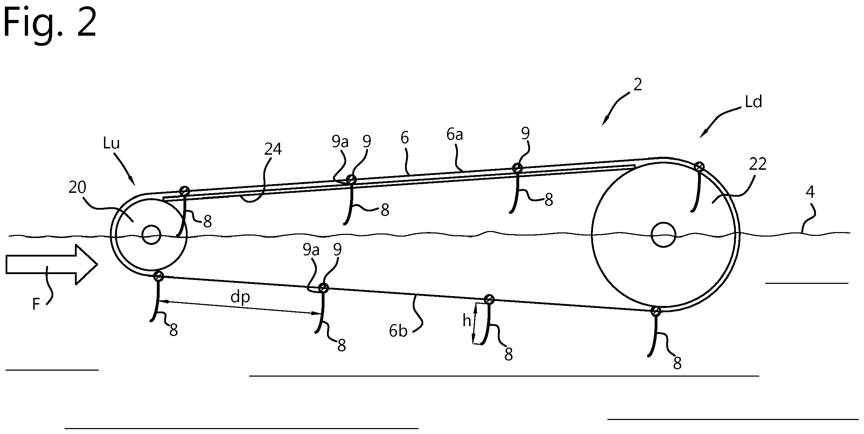

Reference is made to Figure 1 showing a top view of a system for generating power from moving water according to an embodiment of the present invention, and where Figure 2 shows a side view of a conveyor unit as used in an embodiment of the system according to the present invention.

In the embodiments shown, the system 1 comprises a conveyor unit 2 for stationary placement in and/or along a surface of moving water 4 extending from an upstream location Lu toward a downstream location Ld and in a flow direction F of the moving water 4. For ease of reference, the upstream location Lu can be associated with an upstream end of the conveyor unit 2 and the downstream location Ld can be associated with a downstream end of the conveyor unit 2.

The conveyor unit 2 comprises a conveyor member 6 forming a linearly or substantially straight extending continuous (endless) loop and one or more paddle members 8 arranged along and attached to the conveyor member 6. In an embodiment, the conveyor member 6 may be envisaged as an endless carrier, belt, chain, track and so forth.

Like the conveyor unit 2, the conveyor member 6 extends in the flow direction F of the moving water 4 from the upstream location Lu, i.e. the upstream end, toward the downstream location Ld , i.e. the downstream end. Each of the one or more paddle members 8 is arranged substantially normal to or at a paddle angle α to a longitudinal axis X of the conveyor unit 2 and in particular the conveyor member 6. Each of the paddle members 8 is therefore arranged substantially transverse to the longitudinal axis X as shown in Figure 1. In an embodiment, the paddle angle α may be less than 90 degrees, e.g. less than 80 degrees to obtain an desired angle of attack to the flow direction F.

The conveyer member 6 is configured or arranged such that the one or more paddle members 8 are immersible or are at least in part immersible in the moving water 4 along at least a linear or substantially straight portion of the conveyor member 6 and for movement of the conveyor member 6 when the system 1 is in operation. As is clear from Figure 2, when the system 1 is in operation the one or more paddle members 8 are at least temporally immersed in the moving water 4 and propelled thereby between the upstream location Lu, i.e. the upstream end, and the downstream location Ld, i.e. the downstream end of the conveyor unit 2. In operation the one more paddle members 8 are propelled by the moving water 4, as a result of which the conveyor member 6 is moved. The system 1 may then be configured to extract mechanical energy from the moving conveyor member 6 and additionally convert said mechanical energy to electrical energy through some electrical generator unit 26 connected to the conveyor member 6.

The system 1 of the present invention further comprises two deflection bodies 10a, 10b for stationary placement and immersion in the moving water 4, wherein the two deflection bodies 10a, 10b extend from the upstream location Lu toward the downstream location Ld in the flow direction F of the moving water 4. As shown, the two deflection bodies 10a,10b are laterally spaced apart, i.e. spaced sideways with respect to the flow direction F, thereby enclosing a flow constriction or convergence area 12 through which the conveyor unit 2 extends or is configured to extend. The two deflection bodies 10a,10b thus form a parallel-like arrangement and the conveyor unit 2 extends between this arrangement of deflection bodies 10a, 10b in lengthwise sense with respect thereto. It is understood that, depending on their particular design, the two deflection bodies 10a,10b may or may not be positioned parallel to one another as long as a flow constriction or convergence area 12 is provided between the two deflection bodies 10a, 10b.

The flow constriction area 12 as defined by the two deflection bodies 10a, 10b comprises an inlet side 12a and an outlet side 12b, wherein the inlet side 12a is wider, i.e. having a greater inlet width Wᵢ than an outlet width Wₒ of the outlet side 12b. It is understood that the inlet side 12a will be located near or at the upstream location Lu, so near or at the upstream end of the conveyor unit 2, whereas the outlet side 12b will be located near or at the downstream location Ld, so near or at the downstream end of the conveyor unit 2.

According to the present invention, the flow constriction area 12 may be viewed a funnel-like, convergent area in which the moving water 4 converges and constricts to a smaller outlet side 12b with respect to the inlet side 12a. As such the two deflection bodies 10a, 10b are arranged to provide gradual convergence of the moving water 4 from a first flow speed v₁ [m/s] at the inlet side 12a toward a higher second flow speed v₂ [m/s] at the outlet side 12b. Furthermore, an increase from a first mass flow rate q₁ [kg/s] at the inlet side 12a toward a higher second mass flow rate q₂ [kg/s] at the outlet side 12b is provided by the flow constriction area 12.

The convergence of moving water 4 between the two deflection bodies 10a, 10b is provided along the conveyor unit 2 and in particular along a linear portion of the conveyor member 6 where one or more paddle members 8 are immersed in the moving water 4 when the system 1 is in operation. In an exemplary embodiment, a lower loop part 6b of the conveyor member 6 is configured for immersion into moving water 4 and an upper loop part 6a of the conveyor member 6 extends above a surface of the moving water 4. Note that the linear or straight portion of the conveyor member 6 mentioned above is associated with the lower loop part 6b.

The flow constriction area 12 allows both the flow speed and mass flow rate between the inlet side 12a and the outlet side 12b to be increased, thereby significantly improving efficiency and power output of the system 1 for a given footprint/size thereof. Moreover, because of the increased efficiency the system 1 is able to extract usable power levels from moving water over a wide range of average flow speeds, e.g. ranging from 1 m/s to 2.5 m/s or higher.

As an example of what power levels may be achievable by the system 1, in an exemplary embodiment power outputs ranging from 130 kW to 266 kW may be attainable for an average flow speed of about 1 to 1,5 m/s, wherein paddle members 8 have a width of about 8 meters, wherein paddle immersion depth ranges from about 2,0 meters (130 kW) to about 4 meters (266 kW), and wherein the paddle members 8 are spaced apart at a pitch distance dₚ of about 3 meters with respect to each other. Therefore, the system 1 of the present invention may provide a usable source of hydro power in countries/regions with relatively slow moving rivers, canals, streams etc. Of course, the system 1 of the present invention is also suitable for more energetic rivers exhibiting (average) flow speeds ranging from 2,5 m/s and higher.

Please note that power output of the system 1 is highly dependent on design parameters, such as paddle width, paddle immersion depth, paddle pitch distance dₚ, average flow speed of moving water etc., so that the power output of the system 1 may vary for different design parameters.

To allow for sufficient power output by the system 1 for various flow speeds ranging from e.g. 1.25 m/s to 4 m/s, an embodiment is provided wherein the system 1, i.e. the conveyor member 6, comprises at least three paddle members 8 arranged along a lower loop part 6b of the conveyor member 6. In the depicted embodiments, the lower loop part 6b may be considered as a linear or substantially straight part of the conveyor member 6. This embodiment ensures that at least three paddle members 8 are immersed in the moving water 4 between the upstream location/end Lu and the downstream location/end Ld when the system 1 is in operation. The three paddle members 8 allow for sufficient power for various sizes of the paddle members 8 when moving from the upstream location Lu toward the downstream location Ld along the lower loop part 6b. Because of the convergence of moving water within the flow constriction area 12 along the conveyor unit 2, each paddle member 8 experiences an increasing force as it traverses from the upstream location Lu toward the downstream location Ld.

It is understood that further embodiments are conceivable wherein the conveyor member 6 comprises any number of paddle members 8 arranged along a lower loop part 6b. For example, four, five, six, seven or even more paddle members 8 may be arranged along the lower loop part 6b depending on system requirements. Then to allow for a particular number of paddle members 8 along the lower loop part 6b, the pitch distance dₚ between paddle members 8 along said lower loop part 6b may be increased or decreased, and/or the lower loop part 6b may lengthened or shortened for a required pitch distance dₚ.

From a structural point of view, in an embodiment the system 1 of the present invention may be seen as a unitary structure wherein the two deflection bodies 10a, 10b and the conveyor unit 2 are interconnected and affixed to one another, thus forming a single arrangement that can be placed and anchored at a desired position in a river, canal, stream, lake etc. In another embodiment the system 1 may also be seen as a kit comprising two deflection bodies 10a, 10b and a separate conveyor unit 2 to be placed and anchored separately between the two deflection bodies 10a, 10b.

There is in general no limitation as to how the system 1 can be placed and anchored at a particular location. However, to avoid having to build expensive concrete/steel structures onsite whilst damaging the local environment when doing so, the two deflection bodies 10a, 10b may each be a floatable deflection body, allowing convenient placement and anchoring at a desired location. In an even further embodiment, the two deflection bodies 10a, 10b may each be floatable and may comprise a ballast tank, such that the two deflection bodies 10a, 10b can be configured to float, moved into place, and subsequently lowered and anchored.

According to the present invention and as shown in Figure 1, in an embodiment each of the deflection bodies 10a, 10b is an elongated deflection body having an associated longitudinal axis Y. Both of these longitudinal axes of the two deflection bodies 10a, 10b, or just one them, may be arranged substantially parallel to the flow direction F. Furthermore, each of the deflection bodies 10a, 10b has a (total) length substantially spanning a distance equal to the distance between the upstream location/end Lu and the downstream location/end Ld.

From Figure 1 it is seen that the conveyor unit 2, and in particular the conveyor member 6, may (but need not) extend parallel to a longitudinal axis Y, Y' of one of the two deflection bodies 10a, 10b, so wherein the longitudinal axis X of the conveyor member 6 is arranged substantially parallel to the longitudinal axis Y of one of the two deflection bodies 10a, 10b. Instead, in an alternative embodiment, the longitudinal axis X of the conveyor member 6 may be arranged at a conveyor angle β between 0° and 40° degrees to a longitudinal axis Y, Y' of one of the two deflection bodies 10a,10b. This embodiment allows for slanted/skewed placement and orientation of the conveyor member 6 with respect to the two deflection bodies 10a, 10b such that power output and efficiency of the system 1 is improved. In an exemplary embodiment, the conveyor angle β is larger than 0° degrees, e.g. between 2.5°-10°,10°-20°,20°-30° or 30°-40° degrees, thereby increasing the efficiency and power output of the system 1 according to specifications.

In an exemplary embodiment, the inlet side 12a may be twice as wide as the outlet side 12b, i.e. an inlet width Wi of the inlet side 12a may be twice an outlet width Wₒ of the outlet side 12b, so that the second flow speed v₂ at the outlet side 12b is twice the first flow speed v₁ at the inlet side 12a. This embodiment provides a versatile width ratio Wᵢ/Wₒ of about 2 which allows the system 1 to operate efficiently with improved power output at many different types of locations and (average) flow speeds. However, since environmental and flow conditions may vary considerably for each location where the system 1 can be operational, an embodiment is provided wherein one of the two deflection bodies 10a, 10b may be pivotally arranged about a pivot point 11 near or at the outlet side 12b of the flow constriction area 12, e.g. near or at the downstream location Ld or downstream end of the conveyor unit 2. This embodiment allows for an adjustable width ratio Wᵢ/Wₒ whereby controllability of water constriction and convergence between the two deflection bodies 10a, 10b can be finely tuned according to specific requirements.

To further improve efficiency and power output of the system 1, one or each of the two deflection bodies 10a, 10b may comprise a curved inner surface 14 defining a curved boundary 15 of the flow constriction area 12 extending alongside the conveyor unit 2. The curved boundary 15 of the flow constriction area 12 allows for smoother flow constriction and convergence such that e.g. pressure build-up and accumulation of water at the inlet side 12a is reduced.

In an advantageous embodiment, one or each of the two deflection bodies 10a,10b comprises an air foil profile of which a suction side forms the curved inner surface 14. Such an air foil profile further optimizes and facilitates flow convergence between the two deflection bodies 10a, 10b, so that efficiency and power output of the system 1 is further improved as pressure build-up and flow accumulation at the inlet side 12a is kept to a minimum.

In an embodiment, one or each of the two deflection bodies 10a,10b further comprises a flat outer surface 16, i.e. a flat outward facing surface 16, which allows for a smooth and largely undisturbed flow around the system 1 so that pressure build-up and flow accumulation at the inlet side 12a is also minimized.

In a specific embodiment the air foil profile as outlined above may comprise a NACA profile, such as a NACA 4412 (4415) profile, which provides both the curved inner surface 14 as well as a substantially flat outer surface 16, which would represent a pressure side of the air foil profile. In further specific embodiments the air foil profile may comprise a N-22 or a Rhode St. Genese 32 profile, which both provide a curved inner surface 14 as well as a substantially flat outer surface 16.

All of the abovementioned air foil profiles provide excellent hydraulic behaviour to optimize power output of the system 1 over a wide range of average flow speeds ranging from e.g. 1 m/s and higher. Of course, other air foil profiles (e.g. Clark Y profile) may also be considered based on particular applications and requirements for the system 1.

According to the present invention, it is important to note that each of the two deflection bodies 10a, 10b are configured to have a height suitable for immersion along a depth which is equal to or larger than an immersion depth of a paddle member 8, so that the flow constriction area 12 is provided along the immersion depth of each paddle member 8. This allows the flow constriction area 12 to vertically extend along the immersion depth of each immersed paddle member 8 for increasing the flow speed and mass flow rate between the inlet side 12a and the outlet side 12b as explained earlier.

Sufficient immersion of each deflection body 10a, 10b is also important in embodiments wherein each of the two deflection bodies 10a, 10b are floatable, placed in floating fashion, and subsequently anchored as such. In order to optimize the convergence of water along immersed paddle members 8 by the flow constriction area 12, each floating deflection body 10a, 10b would need to be sufficiently immersed along a depth which is equal to or larger than an immersion depth of a paddle member 8.

In embodiments wherein each deflection body 10a, 10b is floatable and comprises a ballast tank, allowing the deflection bodies 10a, 10b to float, moved into place, and subsequently lowered and anchored, the lowered deflection bodies 10a, 10b also need to be sufficiently immersed equal to or larger than the immersion depth of immersed paddle members 8 in order to optimize convergence of water along the immersion depth of immersed paddle members 8 between the inlet side 12a and outlet side 12b of the flow constriction area 12.

Referring to Figure 1, in an embodiment each of the one or more paddle members 8 may comprise a concave flow facing surface 8a, i.e. a concave front surface 8a. This embodiment allows optimized transfer of hydraulic forces into drag and lift forces onto each paddle member 8, thereby improving performance of the system 1. In particular, having a concave front surface 8a also reduces turbulence as each paddle member 8 may then comprise a paddle side edge 8b pointing toward the flow direction F. Reducing turbulence near a paddle member 8 increases operational efficiency and power output of the system 1.

More specifically, as depicted in Figure 1, a concave front surface 8a provides a paddle side edge 8b that defines an associated tangential surface/line at a paddle edge angle y to the flow direction F. As shown, the level of concavity may determine the paddle edge angle y, so that for high concavity of the front surface 8a the paddle edge angle γ decreases, thereby reducing turbulence at or near the paddle side edge 8b. So generally, increasing the concavity of the front surface 8a reduces the paddle edge angle γ to the flow direction F and a such reduces turbulence near the paddle member 8.

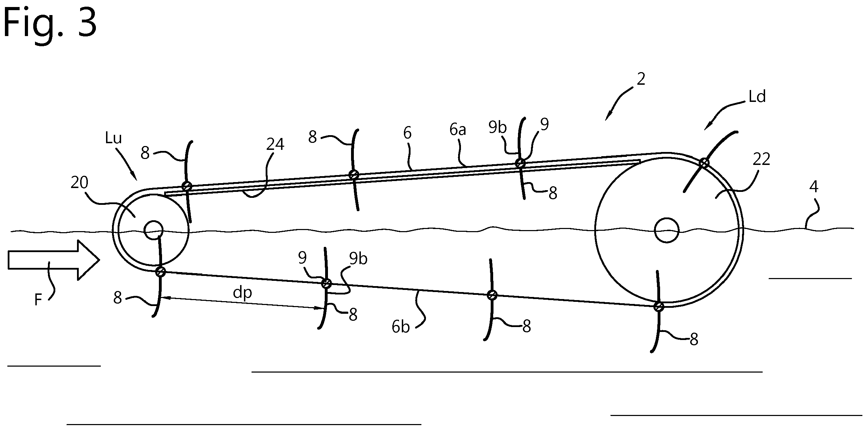

With reference to Figures 2 and 3, each showing a side view of a conveyor unit 2 according to embodiments of the present invention, the one or more paddle members 8 may be arranged along and attached to the conveyor member 6, wherein the one or more paddle members 8 are spaced apart at a pitch distance dₚ, e.g. a constant pitch distance dₚ. Note that it is not required to have a constant pitch distance dₚ but it is convenient to do so in order to keep motion of the conveyor member 6 constant and as a result a more even power output by the system 1. Further, in an embodiment each of the one or more paddle members 8 may comprise a height h ranging from e.g. 1 meter to 5 meter, so that various location and power output requirements can be met. In an exemplary embodiment, all paddle members 8 have an equal height h to facilitate constant power output.

Figure 2 shows an embodiment of the system 1 and in particular the conveyor unit 2 and conveyor member 6, wherein a paddle member 8 comprises an attachment portion 9 at an endpoint 9a of the paddle member 8 for attachment to the conveyor member 6. In a particular embodiment each paddle member 8 comprises such an attachment portion 9 at an endpoint 9a of the paddle member 8 for attachment to the conveyor member 6, thereby allowing each paddle member 8 to extend outwardly relative to the conveyor unit 2 over its full height h along at least a lower loop part 6b of the conveyor member 6. In this embodiment each paddle member 8 allows optimized contribution to the power output of the system 1 as it traverses from the upstream location/end Lu to the downstream location/end Ld along the lower loop part 6b.

When traversing from the downstream location Ld to the upstream location Lu along an upper loop part 6a of the conveyor member 6, it is desirable to minimize e.g. aerodynamic drag by each of the one or more paddle members 8 as no contribution is made to the power output by the system 1 along the upper loop part 6b. For that purpose there is provided an embodiment wherein an attachment portion 9 is a pivotal attachment portion for allowing a paddle member 8 to pivot inwards, e.g. downwards as shown in Figure 2, relative to the conveyor unit 2 along the upper loop part 6a. Therefore, by pivoting one or more paddle members 8 toward a suitable position along the upper loop part 6a, aerodynamic drag can be minimised to increase efficiency of the system 1.

Figure 3 shows an alternative embodiment on how paddle members 8 can be arranged, wherein a paddle member 8 may comprises an attachment portion 9 at a midpoint 9b of the paddle member 8 for attachment to the conveyor member 6. In a particular embodiment each paddle member 8 comprises such an attachment portion 9 at a midpoint 9b of the paddle member 8 for attachment to the conveyor member 6. In this embodiment it is possible to reduce bending moments imposed onto the attachment portion 9 by a paddle member 8 when the paddle member 8 moves through the moving water 4 along the lower loop part 6b, wherein flow forces imposed on the paddle member 8 on both sides of the midpoint 9b provide substantially the same clockwise and counter clockwise moments around the attachment portion 9.

The conveyer unit 6 of the present invention may be arranged in particular ways. For example, in an embodiment the conveyor member 6 may comprise an endless carrier, cable, belt or chain etc. that extends around two rotatable pulley/wheel members 20, 22 spaced apart at a predetermined distance, e.g. spaced at a distance substantially equal to the distance between the upstream Lu and downstream location Ld. When the one or more paddle members 8 are propelled by the moving water 4 along the lower loop part 6b, substantial linear or straight motion of the one or more paddle members 8 along the lower loop part 6b leads to mechanical rotation of the two pulley members 20, 22, wherein such rotation can be converted to electrical power by a suitable electrical generator unit 26 attached to one or both pulley members 20, 22.

In an embodiment the conveyor unit 2 may comprise an upstream pulley/wheel member 20 and a downstream pulley/wheel member 22 spaced apart along the longitudinal axis X of the conveyor member 6, wherein the upstream pulley member 20 has a diameter different from a diameter of the downstream pulley member 22. The conveyor member 6 then forms the continuous loop around the upstream and the downstream pulley members 20, 22. Having different diameters for the upstream and downstream pulley members 20, 22 allows further optimization of the system 1 and power output thereof. For example, as depicted in Figure 2 and 3, in an embodiment the upstream pulley member 20 has a diameter which is smaller than a diameter of the downstream pulley member 22. In this embodiment it is possible to gradually increase immersion depth of a paddle member 8 along the lower loop part 6b when moving from the upstream location Lu toward the downstream location Ld. Conversely, in an alternative embodiment the upstream pulley member 20 has a diameter which is larger than a diameter of the downstream pulley member 22. In an embodiment, an electrical generator unit 26 may be connected to the upstream and/or downstream pulley member 20, 22.

According to the present invention the upper loop part 6a will be arranged above the surface of the moving water 4 when the system 1 is in operation. This may then lead to the conveyor member 6 supporting the full weight of paddle members 8 arranged along the upper loop part 6a, as a result of which the conveyor member 6 may bend or stretch excessively. To reduce the supported weight of the paddle members 8, there is provided an embodiment wherein a conveyor support member 24 extends between the upstream and downstream pulley member 20, 22 for support of the upper loop part 6a of the conveyor member 6. In an exemplary embodiment the conveyor support member 24 may be a linear or substantially straight support rail for sliding and/or rolling engagement with the one or more paddle members 8.

As explained in detail above, see Figure 1, according to the present invention the flow constriction area 12 enclosed by the two deflection bodies 10a, 10b provides a convergent area in which the moving water 4 converges and constricts to the smaller outlet side 12b at the downstream location Ld with respect to the inlet side 12a at the upstream location Lu. The two deflection bodies 10a, 10b are thus configured to provide gradual convergence of the moving water 4 from a first flow speed v1 [m/s] at the inlet side 12a toward a higher second flow speed v2 [m/s] at the outlet side 12b. Convergence of moving water 4 between the two deflection bodies 10a, 10b is provided along the conveyor unit 2 and in particular along a linear portion of the conveyor member 6, i.e. lower loop part 6b, where one or more paddle members 8 are immersed in the moving water 4 when the system 1 is in operation. The flow constriction area 12 allows both the flow speed and mass flow rate between the inlet side 12a and the outlet side 12b to be increased significantly, thereby improving efficiency and power output of the system 1 for a given footprint/size.

Since the two deflection bodies 10a,10b are laterally spaced apart, i.e. spaced sideways horizontally, the flow constriction area 12 is laterally/horizontally convergent. Therefore, lateral convergence of the flow constriction area 12 is provided in a plane substantially parallel to the surface of the moving water 4, wherein the lateral convergence from the inlet side 12a to the outlet side 12b increases the flow speed and mass flow rate of the moving water 4 along the conveyor unit 2 between the two deflection bodies 10a, 10b. In an exemplary embodiment, the lateral convergence is provided by a curved inner surface 14 of each of the two deflection bodies 10a, 10b, e.g., by using an air foil profile of which a suction-side forms the curved inner surface 14.

According to the present invention, to increase the efficiency of the system 1 even further, it is also possible to lift or converge the moving water 4 in upward, vertical fashion at the upstream location Lu, for example, at the inlet side 12a of the flow constriction area 12. Such upward or vertical lift of the moving water 4 at the upstream location Lu further increases the amount of water that can be diverged or pushed toward the one or more paddle members 8 arranged along the conveyor member 6. Also, such upward or vertical lift of the moving water 4 increases the potential energy thereof, wherein the potential energy gain can be converted to kinetic energy and subsequently harvested immersed paddle members 8. In this way the upward or vertical convergence of water at the inlet side 12a of the flow constriction area 12 allows the efficiency of the system 1 to increase even further in addition to the lateral convergence as explained in detail hereinabove.

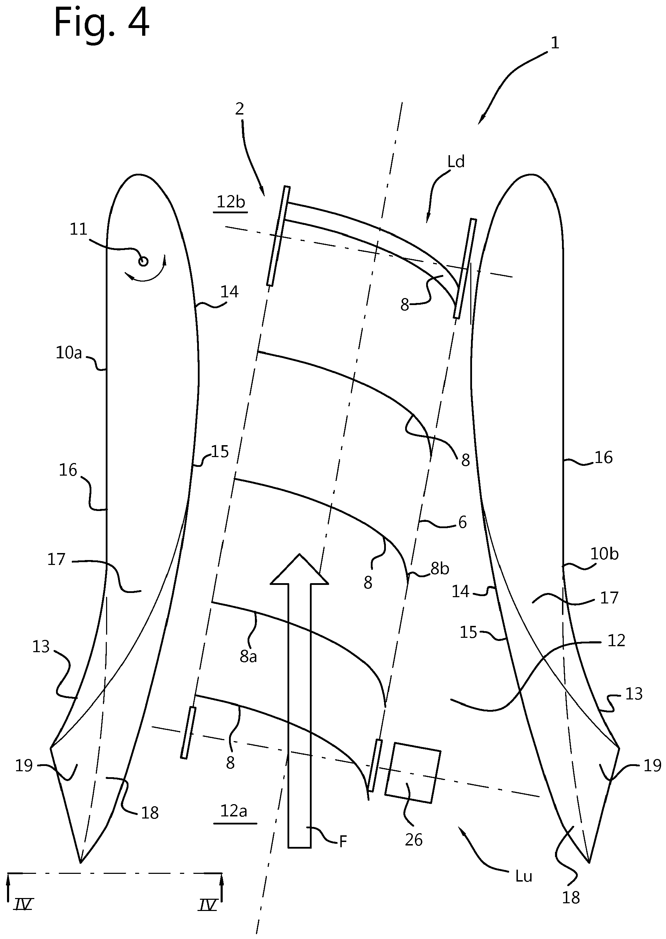

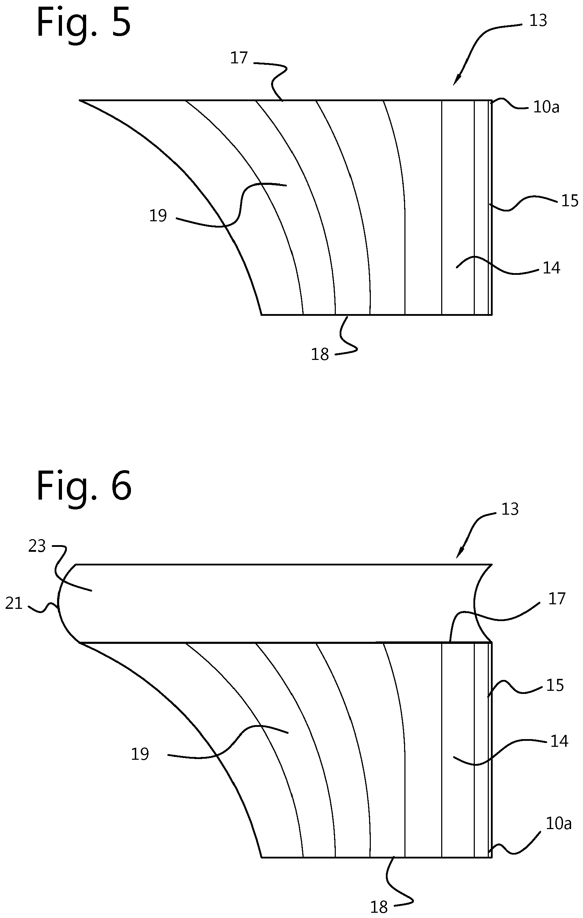

For the purpose of achieving upward lift/convergence of the moving water 4, further embodiments of the system 1 are depicted in Figures 4 and 5. In particular, Figure 4 shows a top view of an embodiment of two deflection bodies 10a, 10b, which can be referred to as "flared" deflection bodies 10a, 10b. Figure 5 shows an upstream front view of a flared deflection body 10a as indicated by the view direction "IV" in Figure 4. Note that the view direction "IV" corresponds to the flow direction F.

In the embodiments shown, each of the two deflection bodies 10a, 10b comprises a top side 17, a bottom side 18 and an upstream flared portion 13 located at the inlet side 12a of the flow constriction area 12, i.e. at the upstream location Lu. The view direction "IV" of the upstream flared portion 13 shows that the flared portion 13 progressively flares or bends outward in sideways fashion from the bottom side 18 toward the top side 17. The progressive outward bend of the upstream flared portion 13 provides a convex lift surface 19 which is configured to progressively widen the inlet side 12a and to push/lift inbound water 4 at the inlet side 12a in upward/vertical fashion. As mentioned above, upward or vertical lift of the moving water 4 at the inlet side 12a increases the amount of water (e.g. mass flow) that can be diverged and guided toward one or more immersed paddle members 8. Furthermore, as the upstream flared portion 13 causes upward or vertical lift/convergence of inbound water 4, the potential energy of the inbound water 4 is locally increased along the upstream flared portion 13. Advantageously, the potential energy gain is subsequently converted to kinetic energy and harvested by immersed paddle members 8.

In light of Figure 4 and 5, in an embodiment each of the two (flared) deflection bodies 10a,10b comprises a curved inner surface 14, where the front view "IV" of Figure 5 shows that each deflection body 10a, 10b may comprise a curved inner surface 14 that smoothly transitions to the convex lift surface 19 at the upstream location Lu. The curved inner surface 14 and the convex lift surface 19 then define the curved boundary 15 of the flow constriction area 12.

Note that only a front view "IV" of the deflection body 10a on the left-hand side is depicted in Figure 5. However, the skilled person will understand that the above is of course applicable to both deflection bodies 10a, 10b as shown of Figure 4, so that the upstream flared portion 13 of the deflection body 10b on the right-hand side progressively flares or bends outward from the bottom side 18 toward the top side 17.

In an advantageous embodiment, each of the two deflection bodies 10a, 10b may comprise an air foil profile of which a suction-side forms the curved inner surface 14. Such air foil profile optimizes and facilitates flow convergence between the two (flared)deflection bodies 10a, 10b, so that efficiency and power output of the system 1 is improved.

Figure 6 shows an upstream front view "IV" of a flared deflection body provided with an water overflow deflector according to an embodiment of the present invention. In particular, an embodiment may be provided wherein each deflection body 10a, 10b comprises an overflow deflector 21 arranged on the top side 17 of an upstream flared portion 13. The overflow deflector 21 is then configured to prevent vertically lifted water from flowing over the top side 17, thus acting as a blocking wall, so that water divergence toward the one or more paddle members 8 is improved. More precisely, as water is vertically lifted by the upstream flared portion 13, the overflow deflector 21 is configured to facilitate guidance of vertically lifted water into the flow constriction area 12 and to prevent that lifted water merely flows over the top side 17 bypassing the system 1.

In an exemplary embodiment, the overflow deflector 21 comprises an elongated body having a concave surface 23 extending along the top side 17 of the upstream flared portion 13. As depicted in Figure 6, the concave surface 23 faces the inlet side 12a of the flow constriction area 12 and as a result diverges/guides vertically lifted water by the convex lift surface 19 toward the conveyor unit 2, i.e. toward one or more immersed paddle members 8. In a further embodiment, the overflow deflector 21 may extend along the entire deflection body 10a, 10b so that the amount of water flowing over the top side 17 bypassing the system 1 is minimized.

In alternative embodiments the overflow deflector 21 may comprise an elongated body having a substantially flat surface facing the inlet side 12a, wherein the flat surface has sufficient height to block water from flowing over the top side 17 bypassing the system 1.

As with Figure 5, even though a single upstream flared portion 13 with overflow deflector 21 is depicted in Figure 6, in an advantageous embodiment the overflow deflector 21 is provided to at least the top side 17 of the upstream flared portion 13 of each of the two deflection bodies 10a, 10b as depicted in Figure 4.

In an advantageous embodiment, each of the two flared deflection bodies 10a, 10b may be a floatable deflection body. In a further advantageous embodiment, each flared deflection body 10a, 10b may comprise a ballast tank such that the flared deflection bodies 10a, 10b are configured to float, can be moved into place and subsequently lowered and anchored. This avoids having to build large, permanent concrete structures that my damage rivers beds unnecessarily.

The present invention has been described above with reference to a number of exemplary embodiments as shown in the drawings. Modifications and alternative implementations of some parts or elements are possible, and are included in the scope of protection as defined in the appended claims.

## Claims

1. A system for generating mechanical and/or electrical power from moving water, the system comprising
a conveyor unit (2) for stationary placement in and/or along a surface of moving water (4) extending from an upstream location (Lu) toward a downstream location (Ld) and in a flow direction (F) of the moving water (4), the conveyor unit (2) comprising
a conveyor member (6) forming a linearly extending continuous loop and one or more paddle members (8) arranged along and attached to the conveyor member (6), each of the one or more paddle members (8) being arranged normal to or at a paddle angle (α) to a longitudinal axis (X) of the conveyor member (6), and wherein the conveyer unit (2) is configured such that the one or more paddle members (8) are immersible in the moving water (4) along at least a linear portion of the conveyor member (6) for movement thereof, wherein the system (1) further comprises
two deflection bodies (10a, 10b) for stationary placement in the moving water (4) extending from the upstream location (Lu) toward the downstream location (Ld) and in the flow direction (F) of the moving water (4), wherein the two deflection bodies (10a,10b) are laterally spaced apart enclosing a flow constriction area (12) through which the conveyor unit (2) extends,
the flow constriction area (12) comprising an inlet side (12a) located at the upstream location (Lu) and an outlet side (12b) located at the downstream location (Ld), wherein the inlet side (12a) is wider than the outlet side (12b).

2. The system according to claim 1, wherein the longitudinal axis (X) of the conveyor member (6) is arranged at a conveyor angle (β) between 0° and 40° degrees to a longitudinal axis (Y, Y') of one of the two deflection bodies (10a, 10b).

3. The system according to claim 1 or 2, wherein one of the two deflection bodies (10a, 10b) is pivotally arranged about a pivot point (11) at the outlet side (12b) of the flow constriction area (12).

4. The system according to any one of claims 1-3, wherein one or each of the two deflection bodies (10a,10b) comprises a curved inner surface (14) defining a curved boundary (15) of the flow constriction area (12) extending alongside the conveyor unit (2).

5. The system according to claim 4, wherein one or each of the two deflection bodies (10a, 10b) comprises an air foil profile of which a suction-side forms the curved inner surface (14).

6. The system according to any one of claims 1-5, wherein each of the two deflection bodies (10a, 10b) comprises a top side (17), a bottom side (18) and an upstream flared portion (13) located at the inlet side (12a) of the flow constriction area (12), wherein the upstream flared portion (13) progressively bends outward in sideways fashion from the bottom side (18) toward the top side (17).

7. The system according to any one of claims 1-6, wherein each of the two deflection bodies (10a,10b) comprises a flat outer surface (16).

8. The system according to any one of claims 1-7, wherein each of the one or more paddle members (8) comprises a concave front surface (8a).

9. The system according to any one of claims 1-8, wherein each paddle member (8) comprises an attachment portion (9) at an endpoint (9a) of the paddle member (8) for attachment to the conveyor member (6).

10. The system according to any one of claims 1-8, wherein each paddle member (8) comprises an attachment portion (9) at a midpoint (9b) of the paddle member (8) for attachment to the conveyor member (6).

11. The system according to any one of claims 1-10, the conveyor unit (2) further comprising an upstream pulley member (20) and a downstream pulley member (22) spaced apart along the longitudinal axis (X) of the conveyor member (6),
the conveyor member (6) forming the continuous loop around the upstream and the downstream pulley members (20, 22), wherein the upstream pulley member (20) has a diameter different from a diameter of the downstream pulley member (22).

12. The system according to claim 11, further comprising a conveyor support member (24) extending between the upstream and downstream pulley member (20, 22) for support of an upper loop part (6a) of the conveyor member (6).

13. The system according to any one of claims 1-12, wherein each of the two deflection bodies (10a, 10b) is a floatable deflection body.

14. The system according to claim 13, wherein each of the two deflection bodies (10a, 10b) comprises a ballast tank configured for floating and sinking the two deflection bodies (10a, 10b).

15. The system according to any one of claims 1-14, wherein the conveyor unit (2) is attached to the two deflection bodies (10a, 10b).
